# EUROPEAN PATENT APPLICATION

(11) **EP 4 535 765 A1**
(43) Date of publication of application: **09.04.2025**
(21) Application number: 23881402.4
(22) Date of filing: 16.08.2023
(51) Int. Cl.: H04L 69/06

(54) **SIGNAL TRANSMISSION AND RECEPTION METHODS, COMMUNICATION NODE, AND STORAGE MEDIUM**

(30) Priority: 25.10.2022 CN 202211314268
(71) Applicant: ZTE Corporation, Shenzhen, Guangdong 518057 (CN)
(72) Inventor: BIAN, Luanjian, Shenzhen, Guangdong 518057 (CN); DAI, Bo, Shenzhen, Guangdong 518057 (CN); HU, Youjun, Shenzhen, Guangdong 518057 (CN); CHEN, Mengzhu, Shenzhen, Guangdong 518057 (CN); YANG, Weiwei, Shenzhen, Guangdong 518057 (CN)
(74) Representative: Ziebig Hengelhaupt Intellectual Property Attorneys Patentanwaltskanzlei PartGmbB
(86) International application number: PCT/CN2023/113371
(87) International publication number: WO 2024/087818

(57) **Abstract**

Provided are signal transmission and reception methods, a communication node, and a storage medium. The communication method comprises: transmitting a frame structure signal, wherein the frame structure signal comprises one or more of the following: a preamble sequence, a separator, a data sequence, control information, and an end symbol.

## Description

The present disclosure claims a priority to the Chinese Patent Application No. 202211314268.3, filed on October 25, 2022, which is incorporated herein by reference in its entirety.

### TECHNICAL FIELD

The present disclosure relates to the field of the passive Internet of Things, and in particular to a signal transmission method, a signal reception method, and a communication node, a storage medium.

### BACKGROUND

With the rapid development of the information industry, the application of the passive Internet of Things (internet of things, IoT) is becoming more and more extensive. As a high integration and comprehensive application of the new generation of the information technology, the passive Internet of Things has the characteristics of strong penetration, great driving effect and good comprehensive benefits, and is yet another promoter of the development of the information industry after computers, the Internet and mobile communication networks.

### SUMMARY

In one aspect, some embodiments of the present disclosure provide a signal transmission method. The transmission method includes: transmitting, by a transmitting end, a frame structure signal; where the frame structure signal includes one or more of: a preamble sequence, a delimiter, a data sequence, control information, and a terminator.

In some embodiments, the frame structure signal includes the preamble sequence, N data sequences, N-1 delimiters and one terminator, and N is an integer greater than 1; the delimiter is located between two adjacent data sequences.

In some embodiments, the frame structure signal includes the preamble sequence, R repeated data sequences, R-1 delimiters and one terminator, where R is an integer greater than 1; the delimiter is located between two adjacent repeated data sequences.

In some embodiments, the frame structure signal includes the preamble sequence, R repeated first data symbols, the delimiter, and R repeated second data symbols to R repeated S-th data symbols, in sequence in time domain; S is a number of data symbols included in one data sequence.

In some embodiments, the frame structure signal includes the preamble sequence, the control information, the delimiter and M data sequences, in sequence in time domain; M is an integer greater than or equal to 1.

In another aspect, some embodiments of the present disclosure provide a signal reception method. The receiving method includes: receiving, by a receiving end, a frame structure signal; where the frame structure signal includes one or more of: a preamble sequence, a delimiter, a data sequence, control information, or a terminator.

In yet another aspect, some embodiments of the present disclosure provide a signal transmission apparatus. The transmission apparatus includes: a transmitting module, configured to transmit a frame structure signal; the frame structure signal includes one or more of: a preamble sequence, a delimiter, a data sequence, control information, and a terminator.

In yet another aspect, some embodiments of the present disclosure provide a signal reception apparatus. The reception apparatus includes: a receiving module, configured to receive a frame structure signal; the frame structure signal includes one or more of: a preamble sequence, a delimiter, a data sequence, control information, or a terminator.

In some embodiments, the signal reception apparatus further includes a processing module, configured to determine the delimiter or the terminator according to a duration of a first symbol.

In some embodiments, the above processing module is configured to: if the duration of the first symbol is greater than a first duration threshold and less than a second duration threshold, determine that the first symbol belongs to the delimiter; or if the duration of the first symbol is greater than a third duration threshold, determine that the first symbol belongs to the terminator; where the first duration threshold is smaller than the second duration threshold, and the second duration threshold is smaller than or equal to the third duration threshold. In some examples, the first duration threshold is equal to a duration of one data symbol.

In some embodiments, the above processing module is further configured to determine a number of repetitions of the data sequence according to a number of delimiters in the frame structure signal.

In some embodiments, the above processing module is also configured to determine a total duration T of R repetitions of a first data symbol in the data sequence according to the delimiter; and determine a number R of repetitions of the data sequence based on the total duration T of the R repetitions of the first data symbol, where the number R of the repetitions is equal to a quotient obtained by dividing the total duration T of the R repetitions of the first data symbol by a duration of one data symbol.

In some embodiments, the above processing module is further configured to determine a total length of the control information according to the delimiter.

In yet another aspect, some embodiments of the present disclosure provide a communication node. The communication node includes: a memory and a processor; the memory and the processor are coupled with each other; the memory is configured to store a computer program; the processor, when executing the computer program, implements the signal transmission method or the signal reception method according to any one of the above embodiments.

In yet another aspect, some embodiments of the present disclosure provide a computer readable storage medium. The computer readable storage medium has stored computer program instructions thereon, and the computer program instructions, when executed by a processor, implement the signal transmission method or the signal reception method according to any one of the above embodiments.

In yet another aspect, some embodiments of the present disclosure provide a computer program product. The computer program product includes computer program instructions, and the computer program instructions, when executed by a processor, implement the signal transmission method or the signal reception method according to any one of the above embodiments.

### BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.
FIG. 1 is a schematic diagram of a frame structure signal according to some technologies.
FIG. 2 is a structural schematic diagram of a backscatter system according to some embodiments.
FIG. 3 is a schematic diagram of a signal transmission method according to some embodiments.
FIG. 4 is a schematic diagram of a frame structure signal according to some embodiments.
FIG. 5 is a schematic diagram of another frame structure signal according to some embodiments.
FIG. 6 is a schematic diagram of yet another frame structure signal according to some embodiments.
FIG. 7 is a schematic diagram of yet another frame structure signal according to some embodiments.
FIG. 8 is a schematic diagram of yet another frame structure signal according to some embodiments.
FIG. 9 is a schematic diagram of yet another frame structure signal according to some embodiments.
FIG. 10 is a schematic diagram of a signal reception method according to some embodiments.
FIG. 11 is a schematic diagram of another signal reception method according to some embodiments.
FIG. 12 is a schematic diagram of yet another signal reception method according to some embodiments.
FIG. 13 is a schematic diagram of yet another signal reception method according to some embodiments.
FIG. 14 is a schematic diagram of yet another signal reception method according to some embodiments.
FIG. 15 is a structural schematic diagram of a signal transmission apparatus according to some embodiments.
FIG. 16 is a structural schematic diagram of a signal reception apparatus according to some embodiments.
FIG. 17 is a structural schematic diagram of a communication node according to some embodiments.

### DETAILED DESCRIPTION

In order to enable those skilled in the art to better understand the technical solutions of the embodiments of the present disclosure, the technical solutions in the present disclosure will be described clearly and completely below in conjunction with the drawings in the present disclosure. Obviously, the described embodiments are only a part of the embodiments of the present disclosure, but not all of the embodiments. All other embodiments obtained based on the embodiments of the present disclosure by the ordinary skilled in the art without paying any creative effort, shall be included in the protection scope of the present disclosure.

It should be noted that, in the present disclosure, words such as "exemplarily" or "for example", etc., are used to represent an example, illustration, or explanation. Any embodiment or design solution described as "exemplarily" or "for example", etc., in the present disclosure should not be construed as preferred or advantageous over other embodiments or design solutions. Rather, the usage of words such as "exemplarily" or "for example", etc., is intended to present relevant concepts in a specific manner.

Hereinafter, terms such as "first" and "second", etc., are used for descriptive purposes only, but cannot be understood to indicate or imply the relative importance or implicitly indicate the number of the indicated technical features. Thus, features defined with "first" or "second", etc., may explicitly or implicitly include one or more features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

With the rapid development of the information industry, the application of the passive Internet of Things is becoming more and more extensive. As a high integration and comprehensive application of the new generation of the information technology, the passive Internet of Things has the characteristics of strong penetration, great driving effect and good comprehensive benefits, and is yet another promoter of the development of the information industry after computers, the Internet and mobile communication networks. In the communication process based on the passive Internet of Things, in order to improve the signal-to-noise ratio of the received data, to extend the communication range or improve the communication quality, sometimes, information needs to be transmitted in a manner of the data re-transmission. In addition, in order to improve the transmission efficiency and save time domain resources, sometimes, information needs to be transmitted by continuously scheduling a plurality of data sequences.

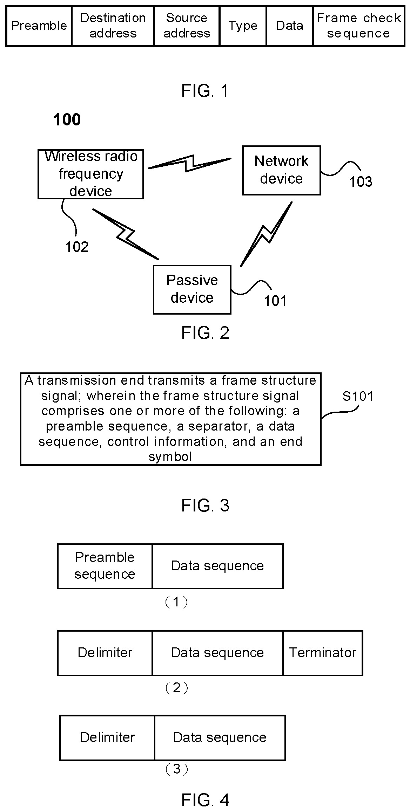

In some technologies, information is usually transmitted or received based on a fixed frame structure signal. A schematic diagram of a frame structure signal in these technologies is given below as an example. Referring to FIG. 1, FIG. 1 shows a frame structure signal in some technologies, and the frame structure signal includes: a preamble, a destination address, a source address, a type, a data part with a variable length, and a frame error check sequence (Frame Check Sequence, FCS), in sequence in time domain; the preamble in FIG. 1 is used to implement the clock synchronization and/or indicate the start of the frame structure signal, and the type in FIG. 1 is used to indicate a protocol type of a data field of the frame structure signal. It can be understood that, other forms of the frame structure signal also exist in some technologies, and please refer to the description of related technologies, which will not be listed here one by one.

The frame structure signal in the above technologies cannot support data repetitions or continuous scheduling of a plurality of data sequences. Therefore, some embodiments of the present disclosure provide a signal transmission method, and the method includes: transmitting, by a transmitting end, a frame structure signal; where the frame structure signal includes one or more of: a preamble sequence, a delimiter, a data sequence, control information, or a terminator.

In the signal transmission method provided by some embodiments of the present disclosure, the format of the frame structure signal is improved, so that the receiving end can know the number of repetitions of the data sequence or the number of data sequences after receiving the frame structure signal, thereby enabling the communication between the receiving end and the transmitting end to support the re-transmission of data or the scheduling of the plurality of data sequences, to improve the communication reliability.

Application scenarios of the technical solutions provided by some embodiments of the present disclosure are described in detail below.

The signal transmission method and the signal reception method provided by some embodiments of the present disclosure may be applied to a backscatter communication system that supports the data transmission of the passive Internet of Things, and the backscatter communication system may be applied to systems of various communication standards. For example, systems that the backscatter communication system may be applicable to, include but do not limited to a Long Term Evolution (long term evolution, LTE) system, a system of various versions evolved based on the LTE, a fifth generation (5th generation, 5G) system, and a new radio (New Radio, NR) system and other next generation communication systems. In addition, the signal transmission method and signal reception method provided by some embodiments of the present disclosure may also be applicable to future-oriented communication technologies, etc.

FIG. 2 is a structural schematic diagram of a backscatter communication system according to some embodiments. To explain the solutions more clearly, reference may be made to the backscatter system shown in FIG. 2. As shown in FIG. 2, the backscatter system 100 may include a passive device 101, a wireless radio frequency device 102, and a network device 103.

There is a communication connection between the passive device 101 and the wireless radio frequency device 102, and there is a communication connection between the wireless radio frequency device 102 and the network device 103. In some embodiments, there is also a communication connection between the passive device 101 and the network device 103.

The passive device 101, the wireless radio frequency device 102 and the network device 103 may be deployed independently; or, the wireless radio frequency device 102 and the network device 103 may be deployed together, for example, the wireless radio frequency device 102 may be deployed in the network device 103, which is not limited specifically in the present disclosure.

In some embodiments, the passive device 101 is a terminal device in the passive Internet of Things or a device with a function of a terminal device. In some embodiments, the passive device 101 may receive information from the wireless radio frequency device 102. In some embodiments, the passive device 101 may reflect information from the wireless radio frequency device 102 to the network device 103. The passive device 101 may also be referred to as a reflector, a backscatter terminal, a reflecting terminal, a semi-passive device, a scatter signal device (ambient signal device), a tag (Tag) or a tag device, etc. An apparatus applied in the embodiments of the present disclosure, for implementing the function of the passive device may be the passive device 101, or may also be an apparatus (such as a chip system) capable of supporting the passive device to implement this function. In the embodiments of the present disclosure, the chip system may be formed by a chip, or may also include a chip and other discrete devices. The embodiments of the present disclosure do not limit the specific device form used for the passive device 101.

In some embodiments, the wireless radio frequency device 102 is a device that may generate a high-frequency carrier signal. In some embodiments, the wireless radio frequency device 102 may transmit information to the passive device 101, for example, may provide a carrier signal to the passive device 101. In some embodiments, the wireless radio frequency device 102 may acquire information transmitted by the network device 103. The wireless radio frequency device 102 may also be referred to as a radio frequency device, an auxiliary device, an auxiliary apparatus, an exciter, an excitation source, a radio frequency source, an interrogator (interrogator), or a reader-writer (reader), etc. An apparatus applied in the embodiments of the present disclosure, for implementing the function of the wireless radio frequency device may be the wireless radio frequency device 102, or may also be an apparatus (such as a chip system) capable of supporting the wireless radio frequency device 102 to implement this function. The embodiments of the present disclosure do not limit the specific device form used for the wireless radio frequency device 102.

Exemplarily, the wireless radio frequency device may be a user equipment (User Equipment, UE). The UE may be a device with a wireless transceiver function, which may be deployed on land, including indoors or outdoors, handheld or vehicle-mounted; may also be deployed on the water (e.g., on a ship); may also be deployed in the air (e.g., an airplane, a balloon and a satellite, etc.). The UE includes a handheld device, a vehicle-mounted device, a wearable device or a computing device with a wireless communication function. Exemplarily, the UE may be a mobile phone, a tablet computer, or a computer with a wireless transceiver function. UE may also be referred to as a terminal or a terminal device, and the terminal device may also be a virtual reality (Virtual Reality, VR) terminal device, an augmented reality (Augmented Reality, AR) terminal device, a wireless terminal in industrial control, a wireless terminal in unmanned driving, a wireless terminal in telemedicine, a wireless terminal in smart grid, a wireless terminal in smart city, a wireless terminal in smart home, etc.

In some embodiments, the network device 103 may also be referred to as a receiver, a receptor, or a receiving device, etc. The network device 103 may include a base station; the base station may have various forms, such as a macro base station, a micro base station, a relay station, and an access point, etc.; the base station may be a base station in the LTE system, a base station in the NR system, or a base station in the future communication system. An apparatus applied in the embodiments of the present disclosure, for implementing the function of the network device may be a network device, or may also be an apparatus (such as a chip system) capable of supporting the network device to implement this function. In the embodiments of the present disclosure, the technical solutions provided by the embodiments of the present disclosure are described by taking an example in which the apparatus for implementing the function of the network device is a network device.

It can be understood that, the system architectures and the service scenarios described in the embodiments of the present disclosure are for more clearly explaining the technical solutions of the embodiments of the present disclosure, and do not constitute a limitation on the technical solutions provided by the embodiments of the present disclosure. The ordinary skilled in the art may know that with the evolution of the network architectures and the emergence of new service scenarios, the technical solutions provided by the embodiments of the present disclosure are also applicable for similar technical problems.

The technical solutions in the embodiments of the present disclosure will be explained below in detail in conjunction with the drawings.

FIG. 3 is a schematic diagram of a signal transmission method according to some embodiments, and the method is performed by a transmitting end. Referring to FIG. 3, the method includes S101.

S101, transmitting, by a transmitting end, a frame structure signal; and the frame structure signal includes one or more of: a preamble sequence, a delimiter, a data sequence, control information, or a terminator.

In some embodiments, the transmitting end may be any one of a passive device, a wireless radio frequency device or a network device in the backscatter system; or, in a case where the wireless radio frequency device and the network device are deployed together, the transmitting end may also be a device with the wireless radio frequency device and the network device deployed together. For the relevant contents of the passive device, the wireless radio frequency device and the network device, reference may be made to the above description of FIG. 2, which will not be repeated here. It can be understood that, in actual applications, with different user needs, the transmitting end may correspond to different devices, which is not limited in the present disclosure.

In some embodiments, the data sequence is formed by data symbols. In some embodiments, each data symbol of the data sequence is one bit information, and the data sequence is one bit sequence. In some embodiments, each data symbol of the data sequence is one symbol information that is encoded, and the data sequence is one symbol sequence that is encoded. In some embodiments, each data symbol of the data sequence may be a modulation symbol that is modulated, and the data sequence is one modulation symbol sequence. It can be understood that the data symbol in the data sequence may also be in other data forms, which is not specifically limited in the embodiments of the present disclosure.

In some embodiments, the delimiter contains a segment of a sustained high-level signal and/or a segment of a sustained low-level signal.

For example, the delimiter is a segment of the sustained high-level signal.

For another example, the delimiter is a segment of the sustained low-level signal.

For another example, the delimiter contains one data symbol and a segment of the sustained high-level signal.

For another example, the delimiter contains one data symbol and a segment of the sustained low-level signal.

For another example, the delimiter contains a short-time low level and a segment of the sustained high-level signal. A duration of the short-time low level is shorter than a duration of the sustained high-level signal.

For another example, the delimiter contains a short-time high level and a segment of the sustained low-level signal. A duration of the short-time high-level signal is shorter than a duration of the sustained low-level signal.

It can be understood that the delimiter may also be other forms of data containing a segment of the sustained high-level signal and/or the sustained low-level signal, and the present disclosure does not limit the form of the delimiter.

In some embodiments, in a case where the delimiter contains a segment of the sustained high-level signal, a duration of the sustained high-level signal contained in the delimiter is greater than a duration of one data symbol, and the duration of the sustained high-level signal contained in the delimiter is less than a duration of the terminator.

In some embodiments, in a case where the terminator also contains a segment of the sustained high-level signal, a duration of the sustained high-level signal contained in the delimiter is less than a duration of the sustained high-level signal contained in the terminator.

In some other embodiments, in a case where the delimiter contains a segment of the sustained low-level signal, a duration of the sustained low-level signal contained in the delimiter is greater than a duration of one data symbol, and the duration of the sustained low-level signal contained in the delimiter is less than a duration of the terminator.

In some embodiments, in a case where the terminator also contains a segment of the sustained low-level signal, a duration of the sustained low-level signal contained in the delimiter is less than a duration of the sustained low-level signal contained in the terminator.

In some embodiments, the frame structure signal includes the preamble sequence; the preamble sequence is located at a frame header of the frame structure signal and used to assist the receiving end to synchronously receive the frame structure signal.

In some embodiments, the frame structure signal includes the terminator; the terminator is located at a frame end of the frame structure signal and used to indicate the end of the frame structure signal.

In some embodiments, the frame structure signal may support the re-transmission of data or the continuous scheduling of a plurality of data sequences.

In some embodiments, the frame structure signal may include at least one of the frame structure signals shown in the implementation 1, implementation 2, implementation 3 or implementation 4 below. However, the frame structure signal is not limited to thereto, and in a case where the frame structure signal includes one or more of the preamble sequence, the delimiter, the data sequence, the control information or the terminator, this frame structure signal may also include other implementations in addition to the following implementation 1 to implementation 4. In order to more clearly explain the frame structure signal provided by the embodiments of the present disclosure, possible implementations of the frame structure signal are introduced in detail below.

### (1) Implementation 1

The frame structure signal includes a preamble sequence, N data sequences, N-1 delimiters and one terminator, where N is an integer greater than 1; the delimiter is located between two adjacent data sequences.

In some examples, the delimiter may be used to separate two adjacent data sequences.

In some examples, the delimiter may be used to determine the end of a previous data sequence or the start of a subsequent data sequence.

In some examples, the frame structure signal includes N subframes; for the N subframes, each subframe includes one data sequence. As shown in (1) of FIG. 4, a first subframe also includes a preamble sequence, and as shown in (2) of FIG. 4, a last subframe also includes a terminator; in addition, other subframes other than the first subframe also include one delimiter.

Exemplarily, when N is greater than 2, as shown in (3) of FIG. 4, other subframes other than the first subframe and the last subframe include one delimiter and one data sequence.

In some examples, the above N data sequences are different data sequences.

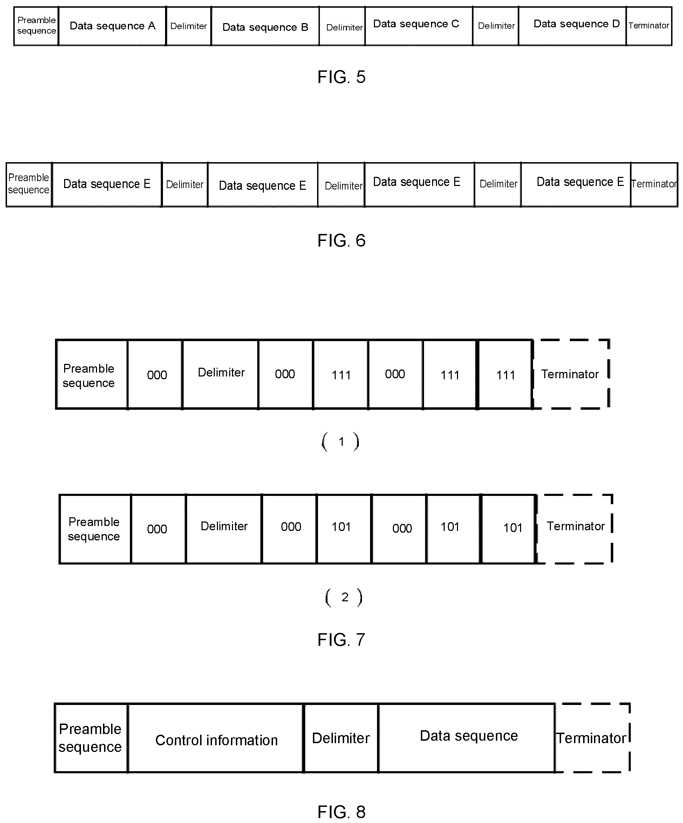

Exemplarily, if four different data sequences, a data sequence A, a data sequence B, a data sequence C, and a data sequence D, are transmitted by the frame structure signal shown in the implementation 1, the frame structure signal may be implemented in the form shown in FIG. 5, for example.

Referring to FIG. 5, the frame structure signal includes the preamble sequence, the above four data sequences, three delimiters and one terminator; and the three delimiters are located between the data sequence A and the data sequence B, between the data sequence B and the data sequence C, and between the data sequence C and the data sequence D, respectively.

In addition, with reference to FIG. 5 still, the frame structure signal includes four subframes, where a first subframe includes a preamble sequence, a last subframe includes a terminator, and a second subframe, a third subframe, and a fourth subframe all include one delimiter.

### (2) Implementation 2

The frame structure signal includes a preamble sequence, R repeated data sequences, R-1 delimiters and one terminator, where R is an integer greater than 1; the delimiter is located between two adjacent repeated data sequences.

In some examples, the delimiter may be used to separate two adjacent data sequences.

In some examples, the delimiter may be used to determine the end of a previous transmission or the start of a subsequent transmission of a data sequence.

In some examples, the delimiter may be used to assist a subsequent receiving end to determine a number of repetitions of the data sequence. The number of repetitions of the data sequence is equal to a number of detected delimiters plus one.

In some examples, the frame structure signal includes R subframes; for the R subframes, each subframe includes one transmission of the data sequence among R repetitions of the data sequence. As shown in (1) of FIG. 4 still, a first subframe also includes a preamble sequence, and as shown in (2) of FIG. 4 still, a last subframe also includes a terminator; in addition, other subframes other than the first subframe also include one delimiter.

Exemplarily, when R is greater than 2, as shown in (3) of FIG. 4 still, other subframes other than the first subframe and the last subframe include one delimiter and one transmission of the data sequence.

The first subframe also includes a preamble sequence, the last subframe also includes a terminator, and other subframes other than the first subframe also include one delimiter.

Exemplarily, if a data sequence E is repeated for four times by the frame structure signal shown in the implementation 2, the frame structure signal may be implemented in the form shown in FIG. 6, for example.

Referring to FIG. 6, the frame structure signal includes a preamble sequence, four repetitions of the data sequence E, three delimiters, and one terminator; and the three delimiters are located between two adjacent data sequences E, respectively.

In addition, refer to FIG. 6 still, the frame structure signal includes four subframes, where a first subframe includes a preamble sequence, a last subframe includes a terminator, and a second subframe, a third subframe, and a fourth subframe all include a delimiter.

### (3) Implementation 3

The frame structure signal includes: a preamble sequence, R repeated first data symbols, a delimiter, and R repeated second data symbols to R repeated S-th data symbols, in sequence in time domain; and S is a number of data symbols included in one data sequence.

In some examples, the first data symbol, the second data symbol to the S-th data symbol shown in the implementation 3 are S data symbols in a same data sequence.

In some examples, a frame end of the frame structure signal also includes a terminator, and the terminator is used to indicate the end of the frame structure signal.

In some examples, a repetition manner of the data symbol may be a simple repetition of the data symbol, or the repetition manner of the data symbol may be extending the data symbol based on an extension code and then achieving the repetition, where the length of the extension code is equal to the number of the repetitions.

For example, a data symbol 1 is repeated for R times (e.g., 3 times) simply, so as to obtain 111. 111 is a data sequence obtained by repeating this data symbol simply.

For another example, the data symbol 1 may be extended based on an extension code [1 1 -1] to obtain extended data [1 1 -1]. [1 1 -1] is a data sequence obtained by extending the data symbol 1 based on the extension code. The length of the extension code is equal to the number of repetitions of the data symbol 1, for example, R. For example, when the data symbol 1 is repeated for three times, the length of the extension code is equal to three. It can be understood that, since the length of the extension code is equal to 3, when the data symbol 1 is multiplied by the extension code, it can be understood that, the data symbol 1 is repeated for three times according to the rule of the data symbols in the extension code.

Exemplarily, for a data sequence 001011, if respective data symbols in the data sequence 001011 are repeated for R times (for example, 3 times) by the frame structure signal shown in the implementation 3, the frame structure signal may be implemented in the form shown in FIG. 7, for example.

Referring to (1) in FIG. 7, if the repetition manner of the data symbol is to simply repeat the data symbol, the frame structure signal includes: a preamble sequence, three repetitions of a first data symbol (i.e., 000), a delimiter, three repetitions of a second data symbol (i.e., 000), three repetitions of a third data symbol (i.e., 111), three repetitions of a fourth data symbol (i.e., 000), three repetitions of a fifth data symbol (i.e., 111), and three repetitions of a sixth data symbol (i.e., 111), in sequence in the time domain.

In some embodiments, referring to (1) in FIG. 7 still, a terminator may also be included at the frame end of the frame structure signal.

Referring to (2) in FIG. 7, if the repetition manner of the data symbol is extending the data symbol based on the extension code and then achieving the repetition, and it is assumed that the extension code is [1 0 1], the frame structure signal includes: a preamble sequence, three repetitions of the first data symbol (i.e., 000), a delimiter, three repetitions of the second data symbol (i.e., 000), three repetitions of the third data symbol (i.e., 101), three repetitions of the fourth data symbol (i.e., 000), three repetitions of the fifth data symbol (i.e., 101), and three repetitions of the sixth data symbol (i.e., 101), in sequence in the time domain.

In some embodiments, referring to (2) in FIG. 7 still, a terminator may also be included at the frame end of the frame structure signal.

### (4) Implementation 4

A frame structure signal includes the frame structure signal includes a preamble sequence, control information, a delimiter and M data sequences, in sequence in time domain; and M is an integer greater than or equal to 1.

For ease of understanding, FIG. 8 shows a structural schematic diagram of a frame structure signal shown in the implementation 4.

In some examples, the control information is control information transmitted for a single time, or the control information is control information repeated for multiple times.

In some examples, the M data sequences are M data sequences transmitted for a single time, or the M data sequences are M data sequences repeated for multiple times.

Exemplarily, if the M data sequences are M data sequences transmitted for a single time, and when the M data sequences are transmitted for a single time by the frame structure signal shown in the implementation 4, the frame structure signal includes: a preamble sequence, control information, a delimiter, and a single transmission of the M data sequences, in sequence in the time domain.

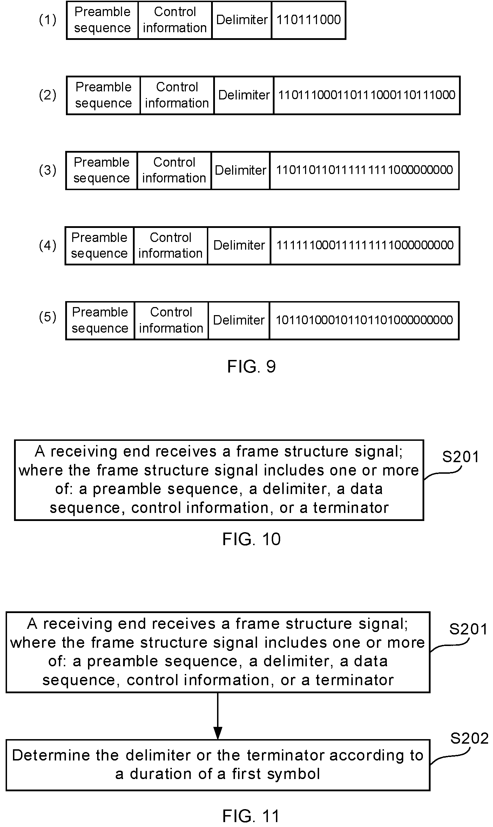

For example, the M data sequences are the following three data sequences: a data sequence 110, a data sequence 111, and a data sequence 000, and then, the frame structure signal shown in the implementation 4 is implemented in the form of the frame structure signal shown in (1) of FIG. 9, for example.

Exemplarily, if the M data sequences are M data sequences repeated for multiple times (for example, R times), the repetition manner of the frame structure signal shown in the implementation 4 includes one or more of the following repetition manner 1, repetition manner 2 or repetition manner 3.

Repetition manner 1: the data sequence is repeated as a whole and transmitted.

When M is equal to 1, it is assumed that the M data sequence is one data sequence F, and when the data sequence F is repeated for R times by the frame structure signal shown in the implementation 4, the frame structure signal includes a preamble sequence, control information, a delimiter, a first transmission of the data sequence F, and a second re-transmission of the data sequence F to an R-th transmission of the data sequence F, in sequence in the time domain.

When M is an integer greater than 1, the repetition manner 1 may be specifically implemented as that: the M data sequences are repeated as a whole and transmitted; or each data sequence of the M data sequences is repeated as a whole and transmitted.

For example, when the M data sequences are repeated as a whole and transmitted, it is assumed that the following three data sequences are repeated for three times by the frame structure signal shown in the implementation 4: a data sequence 110, a data sequence 111, and a data sequence 000 as an example, the frame structure signal shown in the implementation 4 may be specifically implemented in the form of the frame structure signal shown in (2) of FIG. 9. It can be seen that, the three data sequences as a whole 110111000 are repeated for three times, thereby achieving the repetitions of the data sequences.

For another example, when each data sequence of the M data sequences is repeated as a whole and transmitted, it is assumed that the following three data sequences are repeated for three times by the frame structure signal shown in the implementation 4: a data sequence 110, a data sequence 111, and a data sequence 000 as an example, the frame structure signal shown in the implementation 4 may be specifically implemented in the form of the frame structure signal shown in (3) of FIG. 9. **It** can be seen that, in the frame structure signal, the data sequence 110 as a whole is repeated for three times, and then the data sequence 111 as a whole is repeated for three times, and finally the data sequence 000 as a whole is repeated for three times, in the time domain, thereby achieving the repetitions of the data sequences.

Repetition manner 2: data symbols contained in the data sequence each as a unit are repeated and transmitted.

When M is equal to 1, it is assumed that the M data sequences are one data sequence F, and when the data sequence F is repeated for R times by the frame structure signal shown in the implementation 4, each data symbol contained in the data sequence F as a unit is repeated and transmitted.

For example, the data sequence F contains S data symbols, and then, when the data sequence F is repeated for R times by the frame structure signal shown in the implementation 4, the corresponding frame structure signal includes: a preamble sequence, control information, a delimiter, R repetitions of a first data symbol, R repetitions of a second data symbol, to R repetitions of an S-th data symbol, in sequence in the time domain.

When M is greater than 1, data symbols contained in the whole M data sequences each as a unit are repeated and transmitted; or, data symbols contained in each data sequence of the M data sequences each as a unit are repeated and transmitted. However, it should be noted that, no matter whether data symbols contained in the whole M data sequences each as a unit are repeated and transmitted, or data symbols contained in each data sequence of the M data sequences each as a unit are repeated and transmitted, the effect of the repetition is essentially the same. Therefore, the following only illustrates that data symbols contained in each data sequence of the M data sequences each as a unit are repeated and transmitted.

For example, it is assumed that the following three data sequences are repeated for three times by the frame structure signal shown in the implementation 4: a data sequence 110, a data sequence 111, and a data sequence 000, the frame structure signal shown in the implementation 4 may be implemented in the form of the frame structure signal shown in (4) of FIG. 9, for example. It can be seen that each data symbol in the data sequence 110, the data sequence 111, and the data sequence 000 is repeated for three times respectively, thereby achieving the repetitions of the data sequences.

Repetition manner 3: the data sequence is repeated and transmitted based on an extension code.

When M is equal to 1, it is assumed that the M data sequences include one data sequence F, and when the data sequence F is repeated for R times by the frame structure signal shown in the implementation 4, each data symbol in the data sequence F is multiplied by the extension code and then transmitted. The length of the extension code is a number of data elements included in the extension code, and the length of the extension code is equal to the number R of the repetitions.

For example, the data sequence F contains S data symbols, and then, when the data sequence F is repeated for R times by the frame structure signal shown in the implementation 4, the corresponding frame structure signal includes: a preamble sequence, control information, a delimiter, a data sequence obtained by multiplying the extension code by a first data symbol, a data sequence obtained by multiplying the extension code by a second data symbol, to a data sequence obtained by multiplying the extension code by an S-th data symbol, in sequence in the time domain.

When M is greater than 1, each data symbol contained in the whole M data sequences is multiplied by the extension code and then transmitted; or, each data symbol contained in each data sequence of the M data sequences is multiplied by the extension code and then transmitted. However, it should be noted that, no matter whether each data symbol contained in the whole M data sequences is multiplied by the extension code and then transmitted, or each data symbol contained in each data sequence of the M data sequences is multiplied by the extension code and then transmitted, the effect of the repetition is essentially the same. Therefore, the following only illustrates that each data symbol contained in each data sequence of the M data sequences is multiplied by the extension code and then transmitted.

For example, it is assumed that the following three data sequences are repeated for three times by the frame structure signal shown in the implementation 4: a data sequence 110, a data sequence 111, and a data sequence 000, and if the extension code is [1 0 1], the frame structure signal shown in the implementation 4 may be implemented in the form of the frame structure signal shown in (5) of FIG. 9, for example. It can be seen that, each data symbol in the data sequence 110, the data sequence 111, and the data sequence 000 is multiplied by [1 0 1] and then transmitted, so that the data symbol 1 is extended to 101 and the data symbol 0 is extended to 000, thereby achieving the repetitions of the data sequences.

Similarly, if the control information is control information transmitted for multiple times, the repetition manner of the control information in the frame structure signal shown in the implementation 4 includes that: the control information as a whole is repeated and transmitted; or, data symbols contained in the control information each as a unit are repeated and transmitted; or, the control information is repeated based on the extension code and transmitted, for example, each data symbol in the control information is multiplied by the extended code and then transmitted. It should be noted that, the repetition manner of the control information may refer to the above description of the repetition manner (e.g., the repetition manner 1, the repetition manner 2 and the repetition manner 3) of the data sequence, which will not be repeated here.

It can be understood that, the length of the data sequence in the above examples is only an example, and in order to facilitate those skilled in the art to read the solutions, the shorter length of the data sequence is adopted, which should not constitute a limitation on the technical solutions shown in the embodiments of the present disclosure. The present disclosure does not limit the length of the data sequence specifically.

In some examples, the frame structure signal shown in the implementation 4 may also include a terminator (as shown in a dotted box in FIG. 8), and the terminator is located at the frame end of the frame structure signal, to indicate the end of the frame structure signal.

In some examples, the delimiter is located between the control information and the M data sequences, to separate the control information and the M data sequences.

In some examples, the delimiter is also used to indicate a length of the control information and/or a number of repetitions of the control information. The length of the control information is a length of a single transmission of the control information.

In some examples, the delimiter may also facilitate the subsequent receiving end to determine the end time of the control information, and further determine a total length of the control information.

In some embodiments, in a case where the length of a single transmission of the control information is a fixed length, the delimiter may be used to determine a number of repetitions of the control information based on the total length of the control information and the aforementioned fixed length.

In addition, in a case where the control information is transmitted without a repetition (i.e., transmitted for a single time), the delimiter may be used to determine the length of a single transmission of the control information. It can be understood that, in the case of a single transmission, the total length of the control information is the length of a single transmission of the control information.

In some examples, the total length of the control information is equal to a product of the length of a single transmission of the control information and the number of repetitions of the control information; where the length of a single transmission of the control information is a number of data symbols contained in a single transmission of the control information.

In some examples, each type of the total length of the control information corresponds to one type of the length of a single transmission of the control information and one type of the number of repetitions of the control information.

Exemplarily, the total length C_{i, j} of the control information corresponds to one type of the length Pᵢ of a single transmission of the control information and one type of the number Qⱼ of repetitions of the control information; where i is an index of the length of the control information, j is an index of the number of repetitions of the control information, and i and j are integers greater than or equal to 1.

In addition, the length of the control information Pᵢ includes x optional length configurations, for example, including: P₁, P₂, ..., Pₓ; the number Qⱼ of repetitions of the control information contains y optional re-transmission number configurations, for example including: Q₁, Q₂, ..., Q_{y}; x and y are both positive integers; and then the total length C_{i, j} of the control information contains x × y optional total length configurations, and the total length of the control information C_{i, j} = Pᵢ × Qⱼ.

For example, the length of the control information contains two optional length configurations, i.e., P₁ and P₂; the number of repetitions of the control information contains eight optional re-transmission number configurations, including Q₁, Q₂, ..., Q₈. Then, the total length C of the control information contains 16 optional length configurations, which are P₁ × Q₁, P₂ × Q₁, P₁ × Q₂, P₂ × Q₂, ..., P₁ × Q₈, P₂ × Q₈, respectively.

Furthermore, by adjusting the length configuration for the length Pᵢ of a single transmission of the control information and the re-transmission number configuration for the number Qⱼ of repetitions of the control information, the x × y optional total length configurations contained by the total length C_{i, j} of the control information may be enabled to be different from each other. Based on this configuration, the subsequent receiving end may determine Pᵢ and Qⱼ corresponding to C_{i, j} according to the total length C_{i, j} of the control information.

In some other examples, the delimiter and the preamble sequence are also used to jointly indicate the length of the control information and/or the number of repetitions of the control information.

In some examples, the control information is used to indicate relevant information of the data sequence. Exemplarily, the control information is used to indicate one or more of the following indication information: a length of the data sequence, a number of data sequences, a number of repetitions, a modulation scheme, or a code rate; the length of the data sequence is a number of data symbols contained in the data sequence.

Based on the above implementation 1, implementation 2, implementation 3, and implementation 4, the detailed content of the frame structure signal is further introduced below.

In some embodiments, the preamble sequence is also used to indicate whether the frame structure signal is an uplink frame structure signal or a downlink frame structure signal.

In some other embodiments, the preamble sequence is also used to indicate an implementation of the frame structure signal, for example the above implementation 1, implementation 2, implementation 3 or implementation 4 of the frame structure signal.

In some embodiments, in a case where the frame structure signal includes a preamble sequence and a data sequence, the preamble sequence of the frame structure signal is also used to indicate the data sequence is broadcast data or unicast data.

In some embodiments, in a case where the preamble sequence indicates that the data sequence is the unicast data, the frame structure signal includes a receiving end identifier and an instruction index; and in the frame structure signal, the receiving end identifier is located before the instruction index, that is, a bit corresponding to the receiving end identifier is higher than a bit corresponding to the instruction index. The instruction index is used to indicate the receiving end to execute the corresponding instructions when the receiving end identifier is matched.

In some embodiments, the delimiter is also used to indicate one or more of the following transmission configurations of the frame structure signal: a modulation and coding scheme, a code rate, a length of the data sequence, a length of the control information, a number of data sequences, or a number of repetitions.

In a case where the delimiter indicates the transmission configuration of the frame structure signal, each case of the transmission configurations of the frame structure signal corresponds to one index of the delimiter.

In some examples, different cases of the transmission configurations of the frame structure signal may correspond to a same index of the delimiter.

In some other examples, different cases of the transmission configurations of the frame structure signal correspond to different indices of the delimiter.

Exemplarily, when the delimiter is used to indicate the code rate, each code rate corresponds to one index of the delimiter. It can be understood that, the above code rate may also be replaced by any one or a combination of the transmission configurations (e.g., the modulation and coding scheme, the length of the data sequence, the length of the control information, the number of data sequences, or the number of repetitions). For example, when the delimiter indicates the length of the data sequence and the length of the control information, each configuration case of the length of the data sequence and the length of the control information corresponds to one index of the delimiter. The present disclosure does not specifically limit thereon.

In some other embodiments, the preamble sequence and the delimiter are also used to jointly indicate one or more of the following transmission configurations of the frame structure signal: a modulation and coding scheme, a code rate, a length of the data sequence, a length of the control information, a number of data sequences, or a number of repetitions.

In some examples, the index of the delimiter may be determined based on a format signal of the delimiter. For example, the delimiter includes H types (H is a positive integer) of the format signal, and each format signal of the delimiter corresponds to a different index of the delimiter. Similarly, the index of the preamble sequence may be determined based on a format signal of the preamble sequence. For example, the preamble sequence includes K types (K is a positive integer) of the format signal, and each format signal of the preamble sequence corresponds to a different index of the preamble sequence.

In some examples, in a case where the preamble sequence and the delimiter jointly indicate the transmission configuration of the frame structure signal, different cases of the transmission configurations of the frame structure signal may correspond to a same combination of the index of the delimiter and the index of the preamble sequence.

In some other examples, in a case where the preamble sequence and the delimiter jointly indicate the transmission configuration of the frame structure signal, each case of the transmission configurations of the frame structure signal corresponds to one combination of the index of the delimiter and the index of the preamble sequence.

Exemplarily, when the preamble sequence and the delimiter jointly indicate the code rate, each code rate corresponds to one combination of the index of the delimiter and the index of the preamble sequence. It can be understood that, the above code rate may also be replaced by any one or a combination of the transmission configurations (e.g., the modulation and coding scheme, the length of the data sequence, the length of the control information, the number of data sequences, or the number of repetitions). For example, when the preamble sequence and the delimiter jointly indicate the length of the data sequence and the length of the control information, each configuration case of the length of the data sequence and the length of the control information corresponds to one combination of the index of the delimiter and the index of the preamble sequence. The present disclosure does not specifically limit thereon.

In some examples, the delimiter includes H types of the index of the delimiter, and the preamble sequence includes K types of the index of the preamble sequence, where K and H are positive integers, and therefore, there are K × H types of the combination of the index of the delimiter and the index of the preamble sequence.

In some embodiments, one combination of the index of the delimiter and the index of the preamble sequence may indicate one case of the transmission configuration, and each case of the transmission configuration corresponds to one combination {k_num, h_num} of the index of the delimiter and the index of the preamble sequence; k_num is the index of the preamble sequence, and k_num is a non-negative integer less than K (for example, 0, 1, ..., K-1), h_num is the index of the delimiter, and h_num is a non-negative integer less than H (for example, 0, 1, ..., H-1).

It can be seen that, the above K × H types of combinations of the index of the delimiter and the index of the preamble sequence may indicate a maximum of K × H types of transmission configuration cases.

Exemplarily, if different combinations of the index of the delimiter and the index of the preamble sequence correspond to different transmission configuration cases of the frame structure signal, the above K × H types of combinations of the index of the delimiter and the index of the preamble sequence may indicate a maximum of K × H types of transmission configuration cases.

Alternatively, if different combinations of the index of the delimiter and the index of the preamble sequence correspond to the same transmission configuration case of the frame structure signal, transmission configuration cases that can be indicated by the above K × H types of combinations of the index of the delimiter and the index of the preamble sequence is less than K × H types.

The following Table 1 exemplarily shows a correspondence between the value {k_num, h_num} of the combination of the index of the delimiter and the index of the preamble sequence and the transmission configuration.

**Table 1**

| Indication information | {k_num, h_num} value (Optional manner 1) | { k_num, h_num} value (Optional manner 2) |
|---|---|---|
| Case 1 | {0, 0} | {0, 0} |
| Case 2 | {0, 1} | {1, 0} |
| ...... | ...... | ...... |
| Case C | {k_num, C-k_num × H-1} | {C-h_num × K-1, h_num} |
| ...... | ...... | ...... |

Referring to Table 1, there are two correspondences, i.e., the optional manner 1 and the optional manner 2. The receiving end may adopt the correspondence of one of the two manners, which is not specifically limited to the present disclosure.

The above introduces some possible implementations of the frame structure signal provided by the embodiments of the present disclosure, which will not be repeated below.

In some embodiments, for example, the above S101 may be implemented as: transmitting, by the transmitting end, a default frame structure signal. Exemplarily, the frame structure signal may be a frame structure signal used by default, agreed upon in advance with a receiving end.

For example, the transmitting end agrees in advance with the receiving end to use the frame structure signal shown in the implementation 1 as the default frame structure signal, and transmits the frame structure signal shown in the implementation 1 to the receiving end. It can be understood that, the frame structure signal shown in the above implementation 1 may also be replaced by the frame structure signal shown in the implementation 2, the implementation 3 or the implementation 4, which is not specifically limited in the embodiments of the present disclosure.

In some other embodiments, for example, the above S101 may be implemented as: selecting, by the transmitting end, a frame structure signal to be transmitted from at least one preset frame structure signal, based on a high-layer signaling, and transmitting the frame structure signal to be transmitted. The high-layer signaling is used to indicate the frame structure signal used by the transmitting end.

In yet some other embodiments, for example, the above S101 may be implemented as: selecting, by the transmitting end, a frame structure signal to be transmitted from at least one preset frame structure signal, based on a content of data to be transmitted, and transmitting the frame structure signal to be transmitted.

Exemplarily, if the content of the data to be transmitted includes the control information, the frame structure signal shown in the implementation 4 is used as the frame structure signal to be transmitted; or, if the content of the data to be transmitted includes a plurality of different data sequences, the frame structure signal shown in the implementation 1 is used as the frame structure signal to be transmitted; or, if the content of the data to be transmitted includes a plurality of repeated data sequences, the frame structure signal shown in the implementation 2 is used as the frame structure signal to be transmitted; or, if the content of the data to be transmitted includes a data sequence that is repeated for multiple times in units of data symbols, the frame structure signal shown in the implementation 3 is used as the frame structure signal to be transmitted.

It can be understood that, in the signal transmission method provided by the embodiments of the present disclosure, by improving the format of the frame structure signal, the receiving end can know the number of repetitions of the data sequence or the number of data sequences after receiving the frame structure signal, so that the communication between the receiving end and the transmitting end can support the re-transmission of data or the scheduling of a plurality of data sequences, to improve the communication reliability.

FIG. 10 is a schematic diagram of a signal reception method according to some embodiments. The receiving method corresponds to the signal transmission method shown in FIG. 3, and is performed by a receiving end. Referring to FIG. 10, the method includes S201.

S201: receiving, by a receiving end, a frame structure signal; where the frame structure signal includes one or more of: a preamble sequence, a delimiter, a data sequence, control information, or a terminator.

The data form of the data sequence, the content of the delimiter (for example, containing a segment of a sustained high-level signal and/or a sustained low-level signal), the duration of the delimiter (for example, the duration of the sustained high-level signal contained in the delimiter, or the duration of the sustained low-level signal contained in the delimiter), and the possible implementations of the frame structure signal (for example, the implementation 1, the implementation 2, the implementation 3 and the implementation 4) have been introduced in detail when describing the method of the receiving end mentioned above, which will not be repeated here.

In some embodiments, the receiving end may be any one of the passive device, the wireless radio frequency device or the network device in the backscatter system; or, when the wireless radio frequency device and the network device are deployed together, the receiving end may also be a device with the wireless radio frequency device and the network device deployed together. For the relevant contents of the passive device, the wireless radio frequency device and the network device, reference may be made to the above description of FIG. 2, which will not be repeated here. It can be understood that, in actual applications, with different user needs, the receiving end may also correspond to different devices, which is not limited in the present disclosure.

In some embodiments, in a case where the frame structure signal includes a preamble sequence and a data sequence, the preamble sequence of the frame structure signal is also used to indicate the data sequence is broadcast data or unicast data. Additionally, in a case where the preamble sequence indicates that the data sequence is the unicast data, the frame structure signal includes a receiving end identifier and an instruction index, and in the data sequence, the receiving end identifier is located before the instruction index. The instruction index is used to indicate the receiving end to execute the corresponding instructions when the receiving end identifier is matched.

In some embodiments, when the receiving end receives the frame structure signal, if the receiving end's own identity code is inconsistent with the receiving end identifier in the frame structure signal, the receiving end determines that information of the frame structure signal is invalid, or abandons the decoding of the frame structure signal; or, when the receiving end's own identity code is consistent with the receiving end identifier in the frame structure signal, the receiving end performs an operation corresponding to the instruction index according to the instruction index in the frame structure signal.

In some embodiments, as shown in FIG. 11, after S201, the above reception method further includes S202.

S202: determining the delimiter or the terminator according to a duration of a first symbol.

The first symbol is a sustained low-level signal or a sustained high-level signal.

In some examples, S202 is implemented as: if the duration of the first symbol is greater than a first duration threshold and less than a second duration threshold, determining that the first symbol belongs to the delimiter; or if the duration of the first symbol is greater than a third duration threshold, determining that the first symbol belongs to the terminator; where the first duration threshold is smaller than the second duration threshold, and the second duration threshold is smaller than or equal to the third duration threshold.

In some embodiments, the first duration threshold is greater than or equal to a duration of one data symbol.

In some embodiments, the delimiter is used to indicate one or more of the following transmission configurations of the frame structure signal: a modulation and coding scheme, a code rate, a length of the data sequence, a length of the control information, a number of data sequences, or a number of repetitions.

In some embodiments, the preamble sequence and the delimiter are used to jointly indicate one or more of the following transmission configurations of the frame structure signal: a modulation and coding scheme, a code rate, a length of the data sequence, a length of the control information, a number of data sequences, or a number of repetitions.

Based on this, after determining the delimiter, the receiving end may also decode the frame structure signal according to the transmission configuration indicated by the delimiter, or the transmission configuration jointly indicated by the preamble sequence and the delimiter.

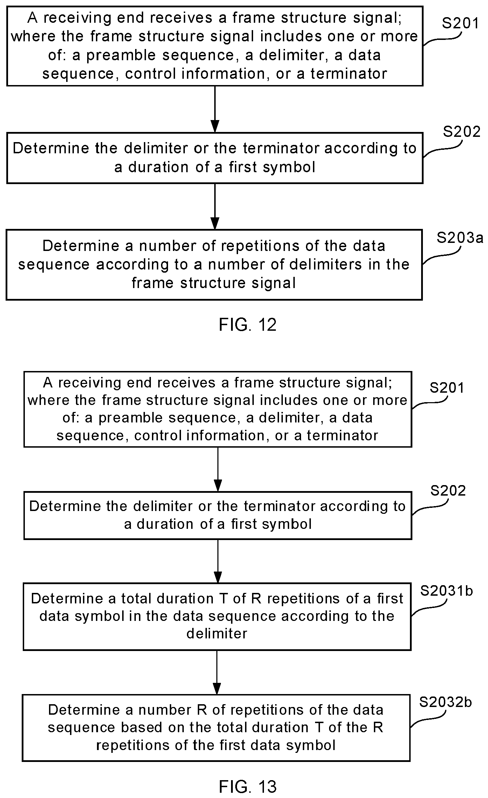

In some embodiments, if the frame structure signal received by the receiving end is the frame structure signal shown in the above implementation 1 or implementation 2, as shown in FIG. 12, after S202, the above reception method further includes S203a.

S203a: determining a number of repetitions of the data sequence according to a number of delimiters in the frame structure signal.

The number of repetitions of the data sequence is equal to a value of the number of delimiters plus 1.

In some embodiments, if the frame structure signal received by the receiving end is the frame structure signal shown in the above implementation 3, as shown in FIG. 13, after S202, the above reception method further includes S2031b to S2032b.

S2031b: determining a total duration T of R repetitions of a first data symbol in the data sequence according to the delimiter.

S2032b: determining a number R of repetitions of the data sequence based on the total duration T of the R repetitions of the first data symbol.

The number R of the repetitions is equal to a quotient obtained by dividing the total duration T of the R repetitions of the first data symbol by a duration of one data symbol.

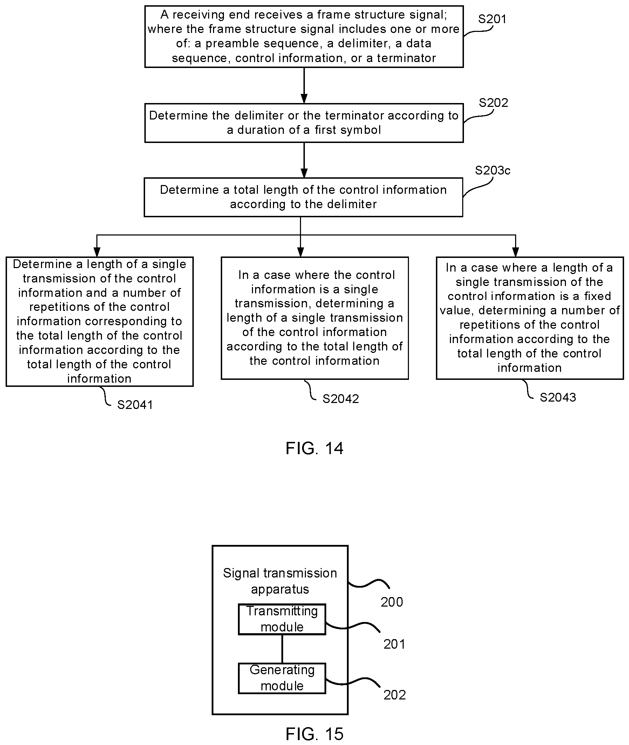

In some embodiments, if the frame structure signal received by the receiving end is the frame structure signal shown in the above implementation 4, as shown in FIG. 14, after S202, the above reception method further includes S203c.

S203c: determining a total length of the control information according to the delimiter.

Exemplarily, referring to the structural schematic diagram of the frame structure signal shown in FIG. 8 still, it can be seen that the control information is located between the preamble sequence and the delimiter, and thus, after determining the delimiter, the receiving end may determine the total length of the control information based on a data length between the preamble sequence and the delimiter.

In some embodiments, as shown in FIG. 14 still, after S203c, the above reception method may further include S2041, S2042, or S2043.

S2041: determining a length of a single transmission of the control information and a number of repetitions of the control information corresponding to the total length of the control information according to the total length of the control information.

In some examples, the length of the control information includes x optional length configurations, for example, including: P1, P2, ..., Px; the number of repetitions of the control information contains y optional re-transmission number configurations, for example, including Q1, Q2, ..., Qy; x and y are both positive integers; then the total length of the control information contains x × y optional total length configurations. In addition, each configuration case of the total length of the control information corresponds to one configuration case of the length of a single transmission of the control information and the number of repetitions of the control information. Therefore, the length of a single transmission of the control information and the number of repetitions of the control information corresponding to the total length of the control information may be determined according to the total length of the control information.

S2042: in a case where the control information is a single transmission, determining a length of a single transmission of the control information according to the total length of the control information.

The length of the single transmission of the control information is equal to the total length of the control information.

S2043: in a case where a length of a single transmission of the control information is a fixed value, determining a number of repetitions of the control information according to the total length of the control information.

The number of repetitions of the control information is equal to a quotient obtained by dividing the total length of the control information by the length of the single transmission of the control information.

In some examples, the control information is used to indicate relevant information of the data sequence. Exemplarily, the control information is used to indicate one or more of the following indication information: a length of the data sequence, a number of data sequences, a number of repetitions, a modulation scheme, or a code rate; the length of the data sequence is a number of data symbols contained in the data sequence.

In some embodiments, after determining the length of a single transmission of the control information and the number of repetitions of the control information, the receiving end may accurately read the control information from the frame structure signal, and then decode the data sequence based on the control information.

It can be understood that, in the signal reception method provided by the embodiments of the present disclosure, by improving the format of the frame structure signal, the receiving end can know the number of repetitions of the data sequence or the number of data sequences after receiving the frame structure signal, so that the communication between the receiving end and the transmitting end can support the re-transmission of data or the scheduling of a plurality of data sequences, to improve the communication reliability.

The above introduces the solutions of the embodiments of the present disclosure mainly from the perspective of methods. It can be understood that, in order to implement the above signal transmission method, the signal transmission apparatus contains a corresponding hardware structure and/or software module for performing various functions; in addition, in order to implement the above signal transmission method, the signal reception apparatus contains a corresponding hardware structure and/or software module for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is performed by hardware or by computer software driving hardware, depends on a specific application and a design constraint condition of the technical solution. Professional technicians may use different methods to implement the described functions for each specific application, but these implementations should not be considered beyond the scope of the present disclosure.

The embodiments of the present disclosure may divide the signal transmission apparatus or the signal reception apparatus into functional modules according to the above method embodiments. For example, each functional module may be divided corresponding to each function, or two or more functions may be integrated into a functional module. The above integrated module is implemented in the form of hardware or in the form of software. It should be noted that the division of the modules in the embodiments of the present disclosure is schematic, which is only a logical functional division, and there may be other divisions in actual implementations. The following is an example of dividing each functional module corresponding to each function.

FIG. 15 is a structural schematic diagram of a signal transmission apparatus according to some embodiments of the present disclosure. The signal transmission apparatus may perform the signal transmission method provided by the above method embodiments. As shown in FIG. 15, the signal transmission apparatus 200 includes: a transmitting module 201. In some embodiments, the signal transmission apparatus 200 further includes a generating module 202.

The transmitting module 201 is configured to transmit a frame structure signal; the frame structure signal includes one or more of: a preamble sequence, a delimiter, a data sequence, control information, or a terminator.

The generating module 202 is configured to generate the above frame structure signal. The frame structure signal may be a frame structure signal shown in any one of the above method embodiments and possible implementations thereof.

In some embodiments, the frame structure signal includes the preamble sequence, N data sequences, N-1 delimiters and one terminator, and N is an integer greater than 1; and the delimiter is located between two adjacent data sequences.

In some embodiments, the frame structure signal includes N subframes; and for the N subframes, each subframe includes one data sequence, a first subframe also includes the preamble sequence, a last subframe also includes the terminator, and other subframes other than the first subframe also include one delimiter.

In some embodiments, the frame structure signal includes the preamble sequence, R repeated data sequences, R-1 delimiters and one terminator, where R is an integer greater than 1; and the delimiter is located between two adjacent repeated data sequences.

In some embodiments, the frame structure signal includes R subframes; and for the R subframes, each subframe includes one transmitted data sequence, a first subframe also includes the preamble sequence, a last subframe also includes the terminator, and other subframes other than the first subframe also include one delimiter.

In some embodiments, the frame structure signal includes the preamble sequence, R repeated first data symbols, the delimiter, and R repeated second data symbols to R repeated S-th data symbols, in sequence in time domain; and S is a number of data symbols included in one data sequence.

In some embodiments, the frame structure signal includes the preamble sequence, the control information, the delimiter and M data sequences, in sequence in time domain; and M is an integer greater than or equal to 1.

In some embodiments, for the control information, a total length C_{i, j} of the control information corresponds to a length Pᵢ of a single transmission of the control information and a number Qⱼ of repetitions of the control information; and i is an index of the length of the control information, j is an index of the number of repetitions of the control information, and i and j are integers greater than or equal to 1.

In some embodiments, the preamble sequence is used to indicate the data sequence is broadcast data or unicast data.

In some embodiments, in a case where the preamble sequence indicates that the data sequence is the unicast data, the data sequence includes a receiving end identifier and an instruction index, and in the data sequence, the receiving end identifier is located before the instruction index.

In some embodiments, the delimiter includes a segment of a sustained high-level signal, and a duration of the sustained high-level signal included in the delimiter is greater than a duration of one data symbol, and the duration of the sustained high-level signal included in the delimiter is less than a duration of a sustained high-level signal included in the terminator; or the delimiter includes a segment of a sustained low-level signal, and a duration of the sustained low-level signal included in the delimiter is greater than a duration of one data symbol, and the duration of the sustained low-level signal included in the delimiter is less than a duration of a sustained low-level signal included in the terminator.

In some embodiments, the delimiter indicates one or more of following transmission configurations of the frame structure signal: a modulation and coding scheme, a code rate, a length of the data sequence, a length of the control information, a number of data sequences, or a number of repetitions; or the preamble sequence and the delimiter jointly indicate one or more of following transmission configurations of the frame structure signal: a modulation and coding scheme, a code rate, a length of the data sequence, a length of the control information, a number of data sequences, or a number of repetitions.

In some embodiments, each case of the transmission configurations of the frame structure signal corresponds to one index of the delimiter.

In some embodiments, each case of the transmission configurations of the frame structure signal corresponds to one combination of an index of the delimiter and an index of the preamble sequence.

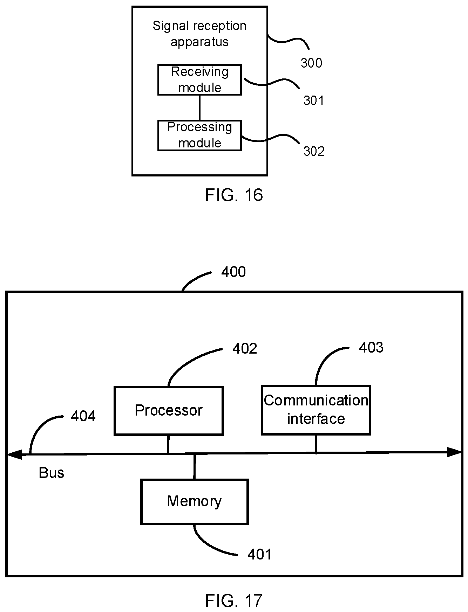

In addition, FIG. 16 is a structural schematic diagram of a signal reception apparatus according to some embodiments of the present disclosure. The signal reception apparatus may perform the signal reception method provided by the above method embodiments. As shown in FIG. 16, the signal reception apparatus 300 includes: a receiving module 301. In some embodiments, the signal reception apparatus 300 further includes a processing module 302.

The receiving module 301 is configured to receive, by a receiving end, a frame structure signal; where the frame structure signal includes one or more of: a preamble sequence, a delimiter, a data sequence, control information, or a terminator.

The processing module 302 is configured to determine the delimiter or the terminator according to a duration of a first symbol.

In some embodiments, the first symbol is a sustained low-level signal or a sustained high-level signal; the processing module 302 is configured to determine that the first symbol belongs to the delimiter if the duration of the first symbol is greater than a first duration threshold and less than a second duration threshold; or determine that the first symbol belongs to the terminator if the duration of the first symbol is greater than a third duration threshold; the first duration threshold is smaller than the second duration threshold, and the second duration threshold is smaller than or equal to the third duration threshold. In some specific examples, the first duration threshold is equal to a duration of one data symbol.

In some embodiments, the processing module 302 is further configured to determine a number of repetitions of the data sequence according to a number of delimiters in the frame structure signal, and the number of repetitions of the data sequence is equal to a value of the number of delimiters plus 1.

In some embodiments, the processing module 302 is further configured to determine a total duration T of R repetitions of a first data symbol in the data sequence according to the delimiter; determine a number R of repetitions of the data sequence based on the total duration T of the R repetitions of the first data symbol, where the number R of the repetitions is equal to a quotient obtained by dividing the total duration T of the R repetitions of the first data symbol by a duration of one data symbol.

In some embodiments, the processing module 302 is further configured to determine a total length of the control information according to the delimiter.

In some embodiments, the processing module 302 is configured to determine a length of a single transmission of the control information and a number of repetitions of the control information corresponding to the total length of the control information according to the total length of the control information; or, in a case where the control information is a single transmission, determine a length of a single transmission of the control information according to the total length of the control information, where the length of the single transmission of the control information is equal to the total length of the control information; or, in a case where a length of a single transmission of the control information is a fixed value, determine a number of repetitions of the control information according to the total length of the control information, where the number of the repetitions of the control information is equal to a quotient obtained by dividing the total length of the control information by the length of the single transmission of the control information.

In a case of implementing the functions of the above integrated modules in the form of hardware, some embodiments of the present disclosure provide a structure of a communication node for performing the signal transmission method or signal reception method provided by the embodiments of the present disclosure. As shown in FIG. 17, the communication node 400 includes a communication interface 403, a processor 402, and a bus 404. In some embodiments, the communication node may also include a memory 401.

The processor 402 may implement or perform various exemplary logical blocks, modules and circuits described in conjunction with the embodiments of the present disclosure. The processor 402 may be a central processor, a general-purpose processor, a digital signal processor, an application specific integrated circuit, a field programmable gate array, or other programmable logic devices, a transistor logic device, a hardware component, or any combination thereof. The processor 402 may implement or perform various exemplary logical blocks, modules and circuits described in conjunction with the embodiments of the present disclosure. The processor 402 may also be a combination that implements computing functions, for example, including a combination of one or more microprocessors, a combination of a digital signal processor (Digital Signal Processor, DSP) and a microprocessor, etc.

The communication interface 403 is configured to connect to other devices via a communication network. The communication network may be the Ethernet, wireless access network, wireless local area networks (Wireless Local Area Network, WLAN), etc.

The memory 401 may be a read-only memory (Read-Only Memory, ROM), or other types of a static storage device that may store static information and instructions, a random access memory (Random Access Memory, RAM), or other types of a dynamic storage device that may store information and instructions, or an electrically erasable programmable read-only memory (Electrically Erasable Programmable Read-Only Memory, EEPROM), a magnetic disk storage medium or other magnetic storage device, or any other medium that can be used to carry or store desired program codes in the form of instructions or data structures and can be accessed by a computer, but which is not limited thereto.

As an example, the memory 401 may exist independently of the processor 402, and the memory 401 may be connected to the processor 402 via the bus 404, and used for storing instructions or program codes. When invoking and executing the instructions or program codes stored in the memory 401, the processor 402 can implement the signal transmission method or the signal reception method provided by the embodiments of the present disclosure.

As another example, the memory 401 may also be integrated with the processor 402.

The bus 404 may be an extended industry standard architecture (Extended Industry Standard Architecture, EISA) bus, etc. The bus 404 may be divided into an address bus, a data bus, a control bus, and so on. For ease of representation, only one bold line is used for the representation in FIG. 17, but it does not mean that there is only one bus or one type of the bus.

Some embodiments of the present disclosure provide a computer readable storage medium (for example, a non-transitory computer readable storage medium), the computer readable storage medium has stored computer program instructions thereon, and the computer program instructions, when executed on a computer, cause the computer to perform the signal transmission method or the signal reception method in any one of the above embodiments.

In some examples, the computer may be a terminal device or a device with a function of a terminal device; or, the computer may be a network device or a device with a function of a network device; or, the computer may be any one of a passive device, a wireless radio frequency device, or a network device; or, the computer may be a device with the wireless radio frequency device and the network device deployed together; or, the computer may be the above communication node or the processor of the communication node; or, the computer may be any other device with a communication function, and the present disclosure does not limit the specific form of the computer.

In some examples, the above computer readable storage medium may include, but is not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card or a flash memory device (e.g., an erasable programmable read-only memory (Erasable Programmable Read-Only Memory, EPROM), a card, a stick or a key drive, etc.). The various computer readable storage media described in the present disclosure may represent one or more devices for storing information and/or other machine readable storage media for storing information. The term "machine readable storage medium" may include, but is not limited to, a wireless channel and various other media capable of storing, containing, and/or carrying instructions and/or data.

The embodiments of the present disclosure provide a computer program product containing instructions, and the computer program product, when executed on a computer, causes the computer to perform the signal transmission method or the signal reception method in any one of the above embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined by the protection scope of the claims.

## Claims

1. A signal transmission method, **characterized by** comprising:
transmitting, by a transmitting end, a frame structure signal; wherein the frame structure signal comprises one or more of: a preamble sequence, a delimiter, a data sequence, control information, or a terminator.

2. The method according to claim 1, wherein the frame structure signal comprises the preamble sequence, N data sequences, N-1 delimiters and one terminator, and N is an integer greater than 1;
wherein the delimiter is located between two adjacent data sequences.

3. The method according to claim 2, wherein the frame structure signal comprises N subframes; wherein for the N subframes, each subframe comprises one data sequence, a first subframe also comprises the preamble sequence, a last subframe also comprises the terminator, and other subframes other than the first subframe also comprise one delimiter.

4. The method according to claim 1, wherein the frame structure signal comprises the preamble sequence, R repeated data sequences, R-1 delimiters and one terminator, wherein R is an integer greater than 1;
wherein the delimiter is located between two adjacent repeated data sequences.

5. The method according to claim 4, wherein the frame structure signal comprises R subframes; wherein for the R subframes, each subframe comprises one transmitted data sequence, a first subframe also comprises the preamble sequence, a last subframe also comprises the terminator, and other subframes other than the first subframe also comprise one delimiter.

6. The method according to claim 1, wherein the frame structure signal comprises the preamble sequence, R repeated first data symbols, the delimiter, and R repeated second data symbols to R repeated S-th data symbols, in sequence in time domain;
wherein S is a number of data symbols comprised in one data sequence.

7. The method according to claim 1, wherein the frame structure signal comprises the preamble sequence, the control information, the delimiter and M data sequences, in sequence in time domain; wherein M is an integer greater than or equal to 1.

8. The method according to claim 7, wherein for the control information, a total length C_{i, j} of the control information corresponds to a length Pᵢ of a single transmission of the control information and a number Qⱼ of repetitions of the control information; wherein i is an index of the length of the control information, j is an index of the number of repetitions of the control information, and i and j are integers greater than or equal to 1.

9. The method according to any one of claims 1 to 8, wherein the preamble sequence is used to indicate the data sequence is broadcast data or unicast data.

10. The method according to claim 9, wherein in a case where the preamble sequence indicates that the data sequence is the unicast data, the data sequence comprises a receiving end identifier and an instruction index, and in the data sequence, the receiving end identifier is located before the instruction index.

11. The method according to any one of claims 1 to 8, wherein
the delimiter comprises a segment of a sustained high-level signal, and a duration of the sustained high-level signal comprised in the delimiter is greater than a duration of one data symbol, and the duration of the sustained high-level signal comprised in the delimiter is less than a duration of a sustained high-level signal comprised in the terminator; or
the delimiter comprises a segment of a sustained low-level signal, and a duration of the sustained low-level signal comprised in the delimiter is greater than a duration of one data symbol, and the duration of the sustained low-level signal comprised in the delimiter is less than a duration of a sustained low-level signal comprised in the terminator.

12. The method according to any one of claims 1 to 8, wherein
the delimiter indicates one or more of following transmission configurations of the frame structure signal: a modulation and coding scheme, a code rate, a length of the data sequence, a length of the control information, a number of data sequences, or a number of repetitions; or
the preamble sequence and the delimiter jointly indicate one or more of following transmission configurations of the frame structure signal: a modulation and coding scheme, a code rate, a length of the data sequence, a length of the control information, a number of data sequences, or a number of repetitions.

13. The method according to claim 12, wherein each case of the transmission configurations of the frame structure signal corresponds to one index of the delimiter.

14. The method according to claim 12, wherein each case of the transmission configurations of the frame structure signal corresponds to one combination of an index of the delimiter and an index of the preamble sequence.

15. A signal reception method, **characterized by** comprising:
receiving, by a receiving end, a frame structure signal; wherein the frame structure signal comprises one or more of: a preamble sequence, a delimiter, a data sequence, control information, or a terminator.

16. The method according to claim 15, further comprising:
determining the delimiter or the terminator according to a duration of a first symbol.

17. The method according to claim 16, wherein the first symbol is a sustained low-level signal or a sustained high-level signal; and the determining the delimiter or the terminator according to the duration of the first symbol, comprises:
if the duration of the first symbol is greater than a first duration threshold and less than a second duration threshold, determining that the first symbol belongs to the delimiter; or
if the duration of the first symbol is greater than a third duration threshold, determining that the first symbol belongs to the terminator;
wherein the first duration threshold is smaller than the second duration threshold, and the second duration threshold is smaller than or equal to the third duration threshold.

18. The method according to any one of claims 15 to 17, further comprising:
determining a number of repetitions of the data sequence according to a number of delimiters in the frame structure signal.

19. The method according to claim 18, wherein the number of repetitions of the data sequence is equal to a value of the number of delimiters plus 1.

20. The method according to any one of claims 15 to 17, further comprising:
determining a total duration T of R repetitions of a first data symbol in the data sequence according to the delimiter; and
determining a number R of repetitions of the data sequence based on the total duration T of the R repetitions of the first data symbol, wherein the number R of the repetitions is equal to a quotient obtained by dividing the total duration T of the R repetitions of the first data symbol by a duration of one data symbol.

21. The method according to any one of claims 15 to 17, further comprising:
determining a total length of the control information according to the delimiter.

22. The method according to claim 21, further comprising:
determining a length of a single transmission of the control information and a number of repetitions of the control information corresponding to the total length of the control information according to the total length of the control information; or
in a case where the control information is a single transmission, determining a length of a single transmission of the control information according to the total length of the control information, wherein the length of the single transmission of the control information is equal to the total length of the control information; or
in a case where a length of a single transmission of the control information is a fixed value, determining a number of repetitions of the control information according to the total length of the control information, wherein the number of the repetitions of the control information is equal to a quotient obtained by dividing the total length of the control information by the length of the single transmission of the control information.

23. A communication node, **characterized by** comprising: a processor and a memory for storing instructions executable for the processor;
wherein the processor is configured to execute the instructions, to cause the communication node to perform the signal transmission method according to any one of claims 1 to 14 and/or perform the signal reception method according to any one of claims 15 to 22.

24. A computer readable storage medium, **characterized in that** the computer readable storage medium has stored computer instructions thereon, and the computer instructions, when executed on a communication node, cause the communication node to perform the signal transmission method according to any one of claims 1 to 14 and/or perform the signal reception method according to any one of claims 15 to 22.
